Europäisches Patentamt

European Patent Office

Office européen des brevets

(11) Publication number: **0 076 361**
**B1**

## (12) EUROPEAN PATENT SPECIFICATION

(45) Date of publication of patent specification: **29.01.86**

(21) Application number: **82105482.2**

(22) Date of filing: **23.06.82**

(51) Int. Cl.⁴: **G 11 B 21/20, G 11 B 5/60**

(54) Air bearing slider for a transducer.

(30) Priority: **07.10.81 US 309300**

(43) Date of publication of application:
**13.04.83 Bulletin 83/15**

(45) Publication of the grant of the patent:
**29.01.86 Bulletin 86/05**

(84) Designated Contracting States:
**DE FR GB IT**

(56) References cited:
EP-A-0 015 383
US-A-3 855 625

PATENTS ABSTRACTS OF JAPAN, vol. 4, no.
156, page 159P34 (638), October 31, 1980

PATENTS ABSTRACTS OF JAPAN

IBM TECHNICAL DISCLOSURE BULLETIN, vol.
22, no. 1, June 1979, New York (US), R.B.
WATROUS: "Self-loading slider", page 333

(73) Proprietor: **International Business Machines
Corporation
Old Orchard Road
Armonk, N.Y. 10504 (US)**

(72) Inventor: **Warner, Michael Walter
135 No 17 Courtland
Stamford Connecticut 06902 (US)**
Inventor: **Garnier, Michael Franklin
6120 Strelow Court
San Jose California 95120 (US)**

(74) Representative: **Hobbs, Francis John
IBM United Kingdom Patent Operations
Hursley Park
Winchester, Hants, SO21 2JN (GB)**

Courier Press, Leamington Spa, England.

## Description

This invention relates to air bearing sliders for supporting a transducer relative to a moving record medium.

Magnetic head assemblies that fly relative to magnetic disks have been used extensively. The objectives for improving the transducing relationship between a magnetic transducer and a magnetic disk include a close spacing between the transducer and the disk, and to maintain such spacing constant. The close spacing, when used with very narrow transducing gaps and very thin magnetic record films, allows short wave length, high frequency signals to be recorded, thereby affording high density, high storage capacity recording.

In accessing type disk drives, for example, the flying height of the magnetic head assembly varies as the head is moved radially to different data tracks because the linear speed of the rotating disk at the outer tracks is greater than that at the inner tracks. To compensate for these variations in flying height, different magnitudes of write current must be used for different radial zones to obtain a substantially constant signal amplitude of the recorded data. Therefore a constant head to disk spacing is desirable to reduce the requirements for such compensation.

Some presently known magnetic disk files operate in a start-stop contact mode, i.e. the magnetic heads are in contact with the magnetic disk surface when the disk starts to rotate and when the disk rotational speed approaches and reaches zero. It is apparent that the longer it takes for the heads to lose contact with the disk surface, the more wear and shorter usage life of the heads will result.

An air bearing slider comprising the features mentioned in the preamble to claim 1 is disclosed in the abstract of JP—A—55105858 published in "Patents Abstracts of Japan", Vol. 4, no. 156, page 159P34 (638). In EP—A—0015383, a slider is described with side rails having a progressive flare from a cross rail to the trailing edge of the slider. U.S. specification No. US—A—3,855,625 describes a further air bearing slider. The present invention seeks to provide a slider having a fast liftoff from a rotating record surface. The slider of this invention also has improved wear characteristics and a longer life.

According to the invention, there is provided an air bearing slider for supporting a transducer relative to a moving record medium, the underside of the assembly being formed to provide a pair of corresponding spaced apart side rails and a cross rail joining the side rails so that there is a recessed section trailing the cross rail and defined on three sides by the three rails, the whole of the lower surfaces of the side and cross rails being co-planar, and the slider being chamfered across its whole width from its leading edge down to the cross rail, characterised in that each of the side rails has an initial portion of constant width extending back from the cross rail to a break point and a wider part extending back from the break point to the trailing edge of the slider.

The invention will now be described by way of example, with reference to the accompanying drawings, in which:—

Figures 1a and 1b represent two alternative embodiments of an air bearing slider according to the invention;

Figure 2 is a side view of an air bearing slider in accordance with this invention and supporting a transducer; and

Figure 3 depicts two plots of flying height, i.e. the spacing between a slider and the rotating disk, against disk speed, and provides a comparison of the performance of a prior art slider and a slider embodying the invention.

Similar reference numerals refer to similar elements throughout the drawings.

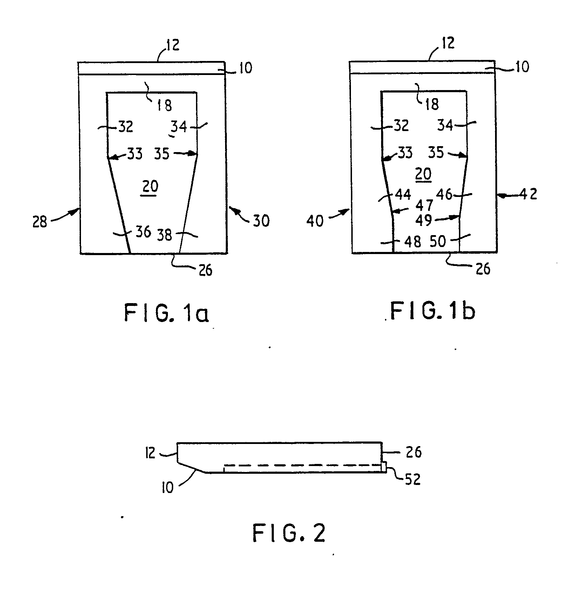

Each of two alternative configurations of air bearing sliders incorporating the invention depicted in Figures 1a and 1b is chamfered down from the leading edge 12 to the cross rail 18 to provide a full taper section 10 across the entire width of the slider.

In Figure 1a, two slide rails 28 and 30 are connected by a cross rail 18. The lower surfaces of the side rails and cross rail are co-planar. The three rails enclose a recessed section 20 that defines a subambient pressure zone or negative pressure region. Each of the rails 28 and 30 has a parallel constant width portion 32, 34 up to a break point 33, 35 and then a flared portion 36, 38 extending from the break point 33, 35 towards the trailing edge 26. The recessed section 20 may be of constant depth or have a tapered sloping geometry (i.e. its depth progressively increases from the cross rail to the trailing edge 26 of the slider). The pressure zone provides the self loading effect of the slider, precluding the need for an external loading force, such as a spring force or hydraulic force. This negative pressure region can be formed in a single step, which may be by a machining or etching process.

The full width taper at the leading edge of the slider provides a fast lift off of the head from the disk. As the mean time to failure for start/stop wear is proportional to the distance travelled in contact with the disk, before reaching glide height, fast lift off is advantageous.

In the alternative design of Figure 1b, each of the rails 40 and 42 has a parallel constant width portion extending back from cross rail 18 to the break point 33, 35, a portion 44, 46 which becomes progressively wider from the break point 33, 35; to a second break point 47, 49; and a constant width portion 48, 50 extending back from the second break point 47, 49 to the trailing edge 26.

It should be understood that the location of the break points 33, 35 are variable, and therefore the lengths of the parallel portions and flared portions are also variable. In addition, the angle of flare of the side rails may be varied.

Each of the two alternative configurations is characterised by a full width taper section at the leading edge. The taper section is made by lapping, as is well known in the art. The different configurations of the rails determine flying height, the stiffness, and stability of the air bearing slider. The slider configurations require only one step to form the recessed section, which may be ten microns in depth relative to the rail surfaces. In an implementation of the invention, a slider is formed that is about four millimeters in length, three millimeters wide and 1.0 millimeters high, with the taper section length from the leading edge to the cross rail being about 0.4 millimeters.

Figure 2 represents a side view of the air bearing slider with the recessed section 20 delineated by the dotted line portion. A magnetic transducer head 52 is disposed at the trailing edge so that the transducing gap is at the air bearing surface of the slider.

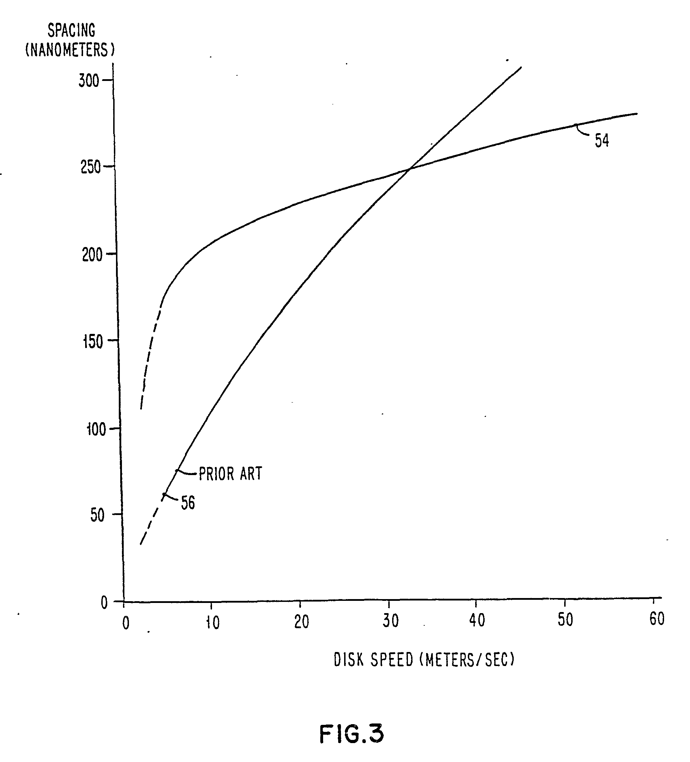

Figure 3 illustrates by curve 54 the fast liftoff of the self-loading slider of this invention to a substantially constant spacing from the disk surface, as compared to the prior art slider slower liftoff with greater variation in head to disk spacing, illustrated by curve 56.

The self-loading, air bearing slider of this invention realises a distinct advantage over prior art heads in the fast liftoff performance with resultant increased wear life and, in addition, is easier to fabricate by the one-step processing of the recessed region. The air bearing slider serves to maintain a substantially constant flying height over all the data tracks on a disk surface, thereby minimising the need for recording channel compensation.

## Claims

1. An air bearing slider for supporting a transducer relative to a moving record medium, the underside of the assembly being formed to provide a pair of corresponding spaced apart side rails (28, 30; 40, 42) and a cross rail (18) joining the side rails so that there is a recessed section (20) trailing the cross rail and defined on three sides by the three rails, the whole of the lower surfaces of the side and cross rails being coplanar, and the slider being chamfered across its whole width from its leading edge (12) down to the cross rail (18), characterised in that each of the side rails has an initial portion (32, 34) of constant width extending back from the cross rail to a break point and a wider part (36, 38; 44, 46, 48, 50) extending back from the break point to the trailing edge (26) of the slider.

2. A slider as claimed in claim 1, in which the wider part of each of the side rails becomes progressively wider from the break point to the trailing edge of the slider.

3. A slider as claimed in claim 1, in which the wider part of each of the side rails consists of a portion (44, 46) which becomes progressively wider from the break point (33, 35) to a second break point (47, 49) and a final portion (48, 50) of constant width extending from the second break point (47, 49) to the trailing edge of the slider.

4. A slider as claimed in any preceding claim, in which the recessed section and the rails have been formed in a single processing step.

5. A slider as claimed in any preceding claim, in which the recessed section has a constant depth.

6. A slider as claimed in any of claims 1 to 4, in which the depth of the recessed section progressively increases from the cross rail to the trailing edge of the slider.

7. An assembly comprising a slider as claimed in any preceding claim and a magnetic transducer head (52) supported on the trailing edge of one of the side rails.

## Patentansprüche

1. Luftlagergleitstück, welches einen Wandler relativ zu einem sich bewegenden Aufzeichnungsmedium hält, wobei die Unterseite des Aufbaus so ausgebildet ist, daß sie ein Paar einander entsprechender im Abstand liegender Seitenschienen (28, 30; 40, 42) und eine die Seitenschienen verbindende Querschiene (18) liefert, so daß ein die Querschiene nachschleppender und auf drei Seiten durch die drei Schienen bestimmter ausgenommener Abschnitt (20) vorliegt, wobei alle unteren Flächen der Seitenschienen und der Querschiene koplanar sind und das Gleitstück über seine gesamte Breite von seinem Vorderrand (12) hinunter zur Querschiene (18) abgeschrägt ist, dadurch gekennzeichnet, daß jede der Seitenschienen einen sich von der Querschiene zu einem Knickpunkt nach hinten erstreckenden Anfangsabschnitt (32, 34) konstanter Breite und einen sich von dem Knickpunkt zum hinteren Rand (26) des Gleitstücks nach hinten erstreckenden breiteren Teil (36, 38,; 44, 46, 48, 50) aufweist.

2. Gleitstück nach Anspruch 1, bei welchem der breitere Teil einer jeden Seitenschiene vom Knickpunkt zum hinteren Rand des Gleitstücks zunehmend breiter wird.

3. Gleitstück nach Anspruch 1, bei welchem der breitere Teil einer jeden Seitenschiene aus einem Abschnitt (44, 46), welcher vom Knickpunkt (33, 35) zu einem zweiten Knickpunkt (47, 49) zunehmend breiter wird, und einem abschließenden Abschnitt (48, 50) konstanter Breite, welcher sich vom zweiten Knickpunkt (47, 49) zum hinteren Rand des Gleitstücks erstreckt, besteht.

4. Gleitstück nach irgendeinem vorstehenden Anspruch, bei welchem der ausgenommene Abschnitt und die Schienen in einem einzigen Verarbeitungsschritt ausgebildet worden sind.

5. Gleitstück nach irgendeinem vorstehenden Anspruch, bei welchem der ausgenommene Abschnitt konstante Tiefe hat.

6. Gleitstück nach irgendeinem der Ansprüche 1 bis 4, bei welchem die Tiefe des ausgenommenen Abschnitts von der Querschiene zum hinteren Rand des Gleitstücks fortschreitend zunimmt.

7. Aufbau mit einem Gleitstück nach irgendeinem vorstehenden Anspruch und einem Magnetwandlerkopf (52), welcher von dem hinteren Rand einer der Seitenschienen gehalten wird.

## Revendications

1. Un patin flottant sur coussin d'air pour supporter un transducteur par rapport à un support d'enregistrement mobile, le côté inférieur de l'ensemble étant profilé de façon à former une paire de branches latérales correspondantes espacées l'une de l'autre (28, 30; 40, 42) et une branche transversale (18) joignant les branches latérales de manière à former une zone évidée (20) placée en arrière de la branche transversale et définie sur trois côtés par les trois branches, toutes les surfaces inférieures des branches latérales et transversales étant coplanaires, et le patin étant chanfreiné sur toute sa largeur depuis son bord avant 12 vers le bas jusqu'à la branche transversale 18, caractérisé en ce que chacune des branches latérales comporte une partie initiale (32, 34) de largeur constante s'étendant vers l'arrière de la branche transversale jusqu'à un point de décrochage et une partie plus large (36, 38; 44, 46, 48, 50) s'étendant vers l'arrière depuis le point de décrochage jusqu'au bord arrière (26) du patin.

2. Un patin comme revendiqué dans la revendication 1, dans lequel la partie plus large de chacune des branches transversales s'élargit progressivement depuis le point de décrochage jusqu'au bord arrière du patin.

3. Un patin comme revendiqué dans la revendication 1, dans lequel la partie plus large de chacune des branches latérales se compose d'une portion (44, 46) qui s'élargit progressivement depuis le point de décrochage (33, 35) jusqu'à un second point de décrochage (47, 49) et une portion finale (48, 50) de largeur constante s'étendant depuis le second point de décrochage (47, 49) jusqu'au bord arrière du patin.

4. Un patin comme revendiqué dans une quelconque des revendications précédentes, dans lequel la zone évidée et les branches ont été formées dans une seule étape opératoire.

5. Un patin comme revendiqué dans une quelconque des revendications précédentes, dans lequel la zone évidée a une profondeur constante.

6. Un patin comme revendiqué dans une quelconque des revendications 1 à 4, dans lequel la profondeur de la zone évidée augmente progressivement de la branche transversale jusqu'au bord arrière du patin.

7. Un ensemble comprenant un patin comme revendiqué dans une quelconque des revendications précédentes et une tête de transducteur magnétique (52) supportée sur le bord arrière d'une des branches latérales.

FIG. 1a

FIG. 1b

FIG. 2

FIG.3